# EUROPEAN PATENT APPLICATION

(11) **EP 1 388 980 A1**
(43) Date of publication of application: **11.02.2004**
(21) Application number: 03016293.7
(22) Date of filing: 18.07.2003
(51) Int. Cl.: H04L 12/46

(54) **Method for extending MPLS tunnels to the customer interface**

(30) Priority: 09.08.2002 US 214756
(71) Applicant: ALCATEL, 75008 Paris (FR)
(72) Inventor: Cetin, Riza, 2018 Antwerpen (BE); Vadlamani, Rao, Nashua, New Hampshire 03060 (US); Tran, Chi, Falls Church, Virginia 22041 (US); Ramsey, Natalie, Herndon, Virginia 22070 (US); Gu, Yuan, Centreville, Virginia 20121 (US)
(74) Representative: Dreiss, Fuhlendorf, Steimle & Becker

(57) **Abstract**

With the present invention, a Multiple Protocol Label Switching (MPLS) tunnel is extended from the ingress router to the ingress customer interface, and from the egress router to the egress customer interface, by means of stitching. Stitching is used to provide customers with virtual leased lines between two interfaces by extending MPLS tunnels from a router to a customer interface. Also, with the present invention tunnels can be "stitched" together between two domains. More specifically, the present invention provides customers with virtual leased lines between two routing domains (i.e., between two Autonomous Systems) by connecting two separate MPLS tunnels across the interface between the domains.

## Description

### FIELD OF THE INVENTION

The invention is related to the field of tunnels. More particularly, this invention relates to Multiple Protocol Label Switching Tunnels.

### BACKGROUND OF THE INVENTION

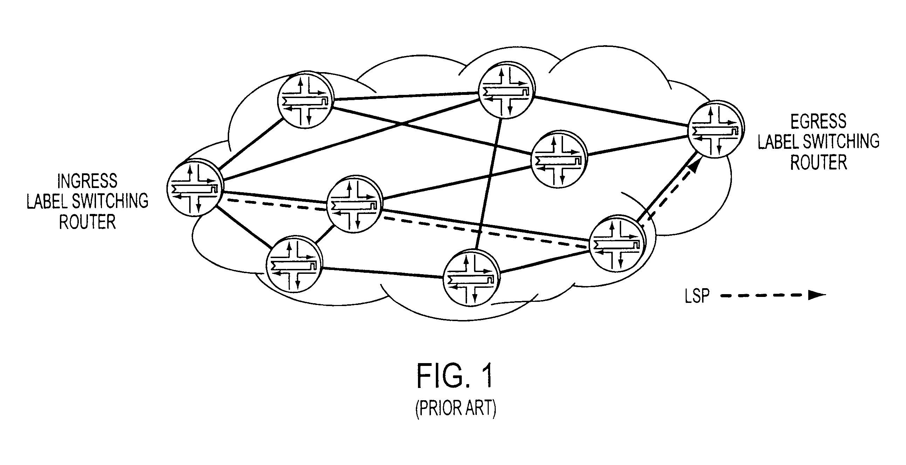

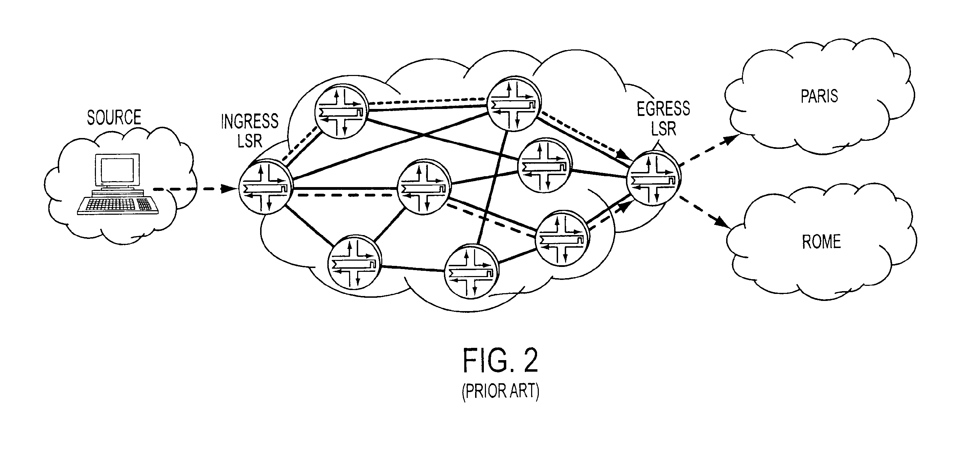

Tunneling is the technique by which packets are sent into the payload of a protocol of the same or a different layer. For example, tunneling occurs when an IP packet is put into another IF packet of the same layer. Tunneling IP into MPLS is an example of tunneling used between different layers. (A packet is a group of bits that includes data, in addition to source and destination addresses. It generally refers to a network layer, or "layer 3", protocol) . A MPLS tunnel is a permanent logical connection, which may consist of a primary/backup pair of label-switched paths (LSP), between two nodes (i.e., routers) in the network.(A node is a switching device whose purpose is to provide communication.) Figures 1 and 2 show MPLS tunnels within an IP network.

Figure 1 illustrates a MPLS tunnel or label-switched path (LSP) which routes packets between an ingress label switched router and an egress label switched router. Figure 2 illustrates the forwarding of packets using MPLS. The ingress label switched router (ingress LSR) determines the class of traffic and assigns a label to the packet. It forwards traffic sent to Paris on the upper path or upper LSP (dotted line). It forwards traffic sent to Rome on the lower· LSP (dashed line). Traffic is label-swapped (given a new local label) at each transit LSR. The egress LSR removes the MPLS header and forwards each packet based on the destination address.

MPLS tunnels are used within a single domain to provide efficient routing of traffic on a pre-determined path. The MPLS tunnel starts at the ingress side of the ingress router, and ends at the egress side of the egress router. A tunnel transmits traffic in the following manner. IP traffic enters at the ingress (input) node. A tunnel has been configured starting at this node, and bandwidth has been reserved according to a service level agreement (SLA). The IP traffic is transmitted through the MPLS tunnel ensuring that the traffic is routed at the agreed-to bandwidth.

Routing through the tunnel is done by label switching. A label is a header that is attached to a packet. MPLS labels contain local routing information, and are used to identify the route taken by the packet. At each node that the label is read, the next "hop" through the tunnel is determined, and the label is switched with the next label in the path. Thus, labels are read and swapped at each node, rather than using a routing table lookup by destination address. The label lookup is a faster way to route the packet, and ensures that the same logical path is always taken, following the service level agreement. Thus, the tunnel acts as a virtual leased line through the domain, connecting the ingress and egress nodes. At the egress (output) node, the label is "popped", or removed from the packet, and the IP packet is sent to the customer interface.

### SUMMARY OF THE INVENTION

In a preferred embodiment, the invention is a method of extending a tunnel to a customer interface, comprising the steps of configuring a tunnel between a first router and a second router, performing a classification configuration at the first router, and stitching an out-segment from the second router to one customer interface.

In another preferred embodiment, the invention is a method of coupling tunnels between a first and a second domain, comprising the steps of assigning a label for a path located between the first and the second domain, setting up a configuration at a first router of the first domain specifying bandwidth and quality of service, configuring a classification table at a second router of the second domain, whereby the classification table has a label which is configured and agreed to by both domains, and defining an out-segment which connects a first tunnel connected to the first router in the first domain to the second tunnel connected to the second router located in the second domain.

In still another preferred embodiment, the invention further comprises an extension between a customer interface and a tunnel, comprising a first router located at a first end of the tunnel, and a second router located at a second end of the tunnel. The first router comprises a first ingress board having a first interface, at least one classification table, at least one classifier operably coupled to said classification table and to said first interface, and at least one filter operably coupled to said first interface. The second router comprises a processor, an egress board having at least one out-segment interface and an out-segment table operably coupled to said processor, and a second ingress board having at least one in-segment interface and an in-segment table. The extension further comprises a transmission medium operably coupled between said egress board and said second ingress board, whereby a token sent through said transmission medium links said in-segment table and said out-segment table.

In still another preferred embodiment, the invention comprises an extension coupling tunnels, comprising a first router located at a first tunnel and a second router located at a second tunnel. The first router comprises a processor, an egress board having at least one out-segment interface and an out-segment table operably coupled to said processor, and a second ingress board having at least one in-segment interface and an in-segment table. The second router comprises a first ingress board having a first interface and, at least one classification table, at least one classifier operably coupled to said classification table and to said first interface, and at least one filter operably coupled to said first interface. The extension further comprises a transmission medium operably coupled between the egress board and the second ingress board, whereby a token sent through said transmission medium links the in-segment table and the out-segment table.

### BRIEF DESCRIPTION OF THE DRAWINGS

Figure 1 illustrates a prior art MPLS tunnel, also known as a labeled-switched path (LSP).
Figure 2 illustrates the forwarding of packets using MPLS according to the prior art.
Figure 3 illustrates the extension of the virtual leased line to the customer interfaces for two customers, customer A and customer B according to one embodiment of the present invention.
Figure 4 is a flowchart of the steps performed when using stitching to extend the virtual leased line to the customer interface according to one embodiment of the present invention.
Figure 5A shows a label switched path (LSP), or tunnel, between two label-switching routers, and not between customers according to one embodiment of the present invention.
Figure 5B is a flowchart illustrating the steps (represented by circles containing numbers in Figure 5A) taken to set-up the tunnel according to one embodiment of the present invention.
Figure 5C is a flowchart illustrating the steps taken to rout IP packets through the tunnel according to one embodiment of the present invention.
Figure 6 illustrates all ingress traffic being sent to the same virtual lease line (VLL) according to one embodiment of the present invention.
Figure 7 illustrates ingress classification which is by micro-flow according to one embodiment of the present invention.
Figure 8 illustrates the use of "Penultimate hop popping" to extend the VLL tunnel towards the egress customer interface according to one embodiment of the present invention.
Figure 9 illustrates an output segment from the egress router to a customer interface according to one embodiment of the present invention.
Figure 10 is a flowchart illustrating the steps performed when stitching an output segment from the egress router to a customer interface according to one embodiment of the present invention.
Figure 11 is a flowchart illustrating the steps taken when stitching the incoming customer interface to a VLL tunnel, or when extending a VLL tunnel to the customer interface (itf-I) at the ingress router (I).
Figure 12 illustrates stitching an input segment from the ingress router of a VLL tunnel to a customer interface according to one embodiment of the present invention.
Figure 13 illustrates stitching between different domains or autonomous systems according to one embodiment of the present invention.
Figure 14 is a flowchart illustrating the steps that are performed when stitching between two tunnels located indifferent domains according to one embodiment of the present invention.
Figure 15 illustrates the use of "penultimate hop popping" for stitching an output segment from tunnel 1 to tunnel 2 according to one embodiment of the present invention.
Figure 16 illustrates the output segment from the egress node of tunnel 1 to the ingress node of tunnel 2 according to one embodiment of the present invention.
Figure 17 is a flowchart illustrating the steps performed when stitching an output segment from the egress node of tunnel 1 to the ingress node of tunnel 2 according to one embodiment of the present invention.

### DETAILED DESCRIPTION OF THE INVENTION

In the prior art, customers do not have MPLS tunnels with guaranteed bandwidth between two customer interfaces because the tunnel starts at the ingress router and terminates at the egress router.

### Stitching

The present invention solves this problem. With the present invention, the MPLS tunnel is extended from the ingress router to the ingress customer interface, and from the egress router to the egress customer interface, by means of "stitching". Stitching is used to provide customers with virtual leased lines between two interfaces by extending Multiple Protocol Label Switching (MPLS) tunnels from a router to a customer interface. More specifically, stitching or MPLS tunnels allows the virtual leased line to be extended from the ingress router to the ingress customer interface, and from the egress router to the egress customer interface. This allows bandwidth between two customer interfaces to be guaranteed. (The routers used in the present invention can be the router described in copending U.S. patent application, SNMP Trap and inform Shaping Mechanism, Serial No. 10/118,894, filed April 10, 2002, page 3, line 26 to page 5, line 25 and figures 1-3, hereby incorporated by reference. However, many other routers can be used with the present invention.)

Also, with the present invention tunnels can also be "stitched" together between two domains. More specifically, the present invention provides customers with virtual leased lines between two routing domains (i.e., between two Autonomous Systems) by connecting two separate MPLS tunnels across the interface between the domains. Thus, stitching also allows two different MPLS tunnels residing within two different domains to be coupled, thus bridging the gap between domains.

### Extending the Virtual Leased Line to the Customer Interface

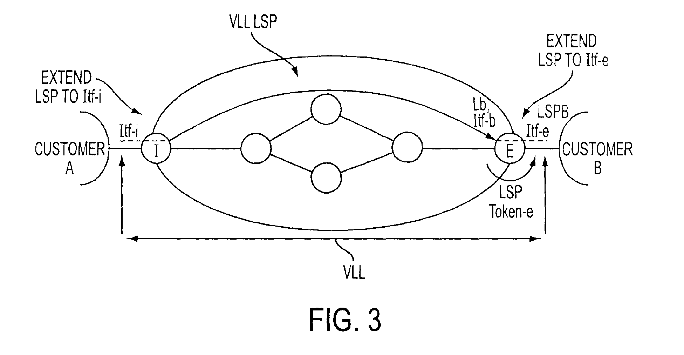

The first feature of the present invention is that stitching can be used to extend the virtual leased line from the router to the customer interface. This represents an improvement over the prior art because quality of service (QoS) is extended to the customer interface by the stitching. For example, stitching allows the bandwidth to be maintained at the agreed-to level at the customer interface. Figure 3 shows the extension of the virtual leased line to the customer interfaces for two customers, customer A and customer B. The extended virtual leased line is configured by stitching label-switched paths at the ingress router (I) and at he egress router (E) .

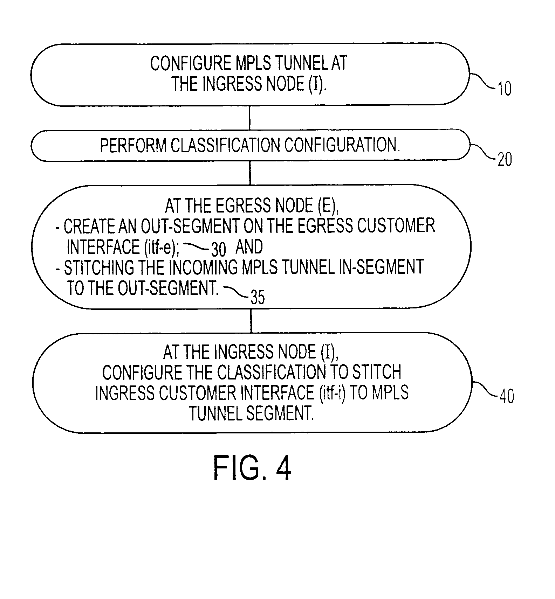

The following steps are performed when using stitching to extend the virtual leased line to the customer interface (Figure 4):
A) Configure an MPLS tunnel at its ingress node or router (I) . (Step 10 of Figure 4)

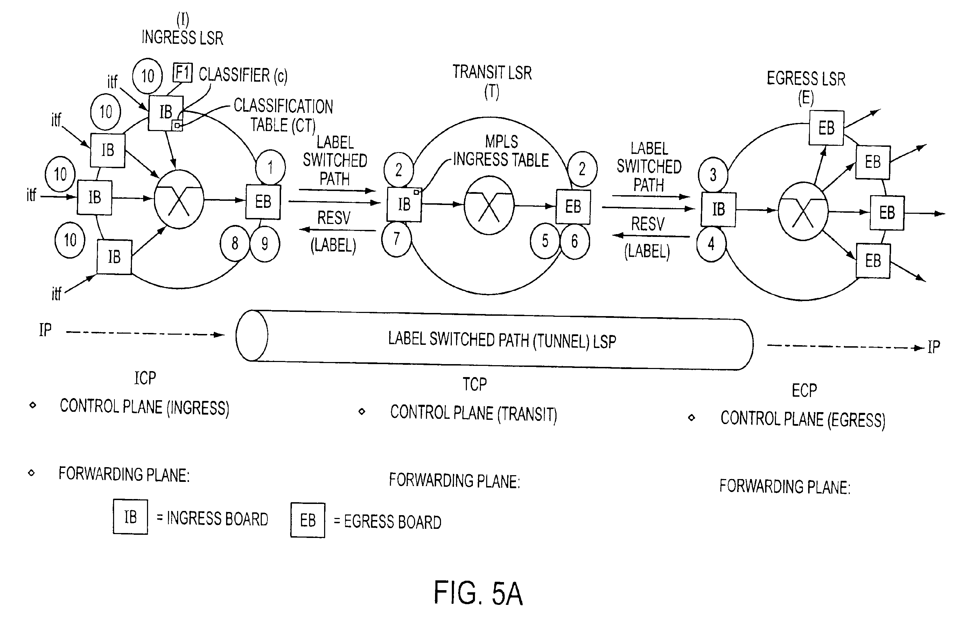

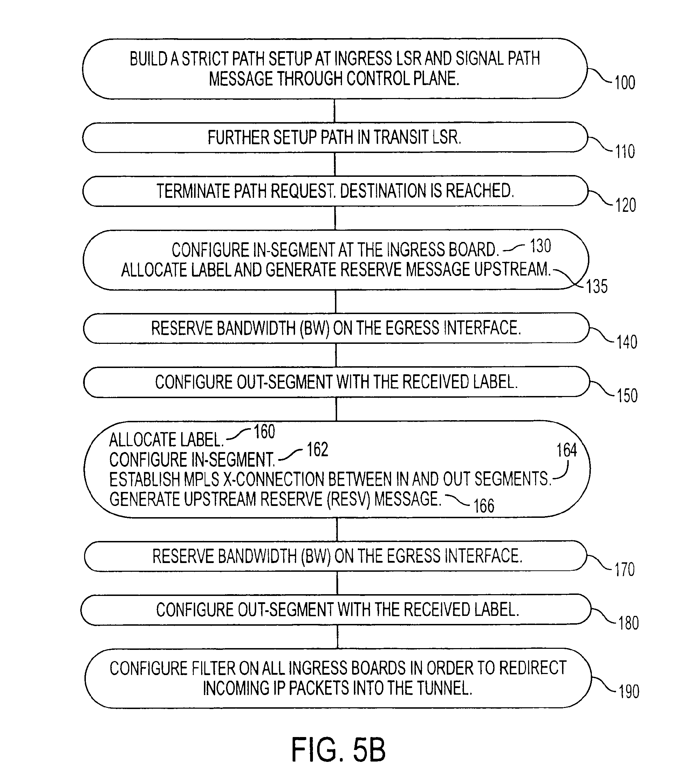

   Figure 5A shows a label switched path (LSP), or tunnel, between two label-switching routers, not between customers. The following steps (represented by circles containing numbers in Figure 5A) are taken to set-up the tunnel. These steps are illustrated in the flowchart in Figure 5B.
   1) Build a strict path setup at ingress LSR (I) (100).
   2) Further setup path in the transit LSR (T) (110).
   3) Terminate path request. Destination is reached (120).
   4) Configure in-segment at the ingress board (IB) on the Egress LSR (E) (130). Allocate label and generate label reservation (RESV) message (135).
   5) Reserve bandwidth (BW) on the egress interface or board (EB) on the Transit LSR (T) (140).
   6) Configure out-segment with the received label at the Transit LSR (T) (150).
   7) Allocate label at ingress board (IB) of the Transit LSR (T) (160). Configure in-segment (162). Establish MPLS x-connection between in and out segments (164). Generate upstream label reservation (RESV) message (166).
   8) Reserve bandwidth (BW) on the egress interface or board (EB) of the Ingress LSR (I) (170).
   9) Configure out-segment with the received label on the egress interface or board (EB) of the Ingress LSR (I) (180).
   10) Configure filter on all ingress boards (IB) of the Ingress LSR (I) in order to redirect incoming IP packets (P) into the tunnel (190).

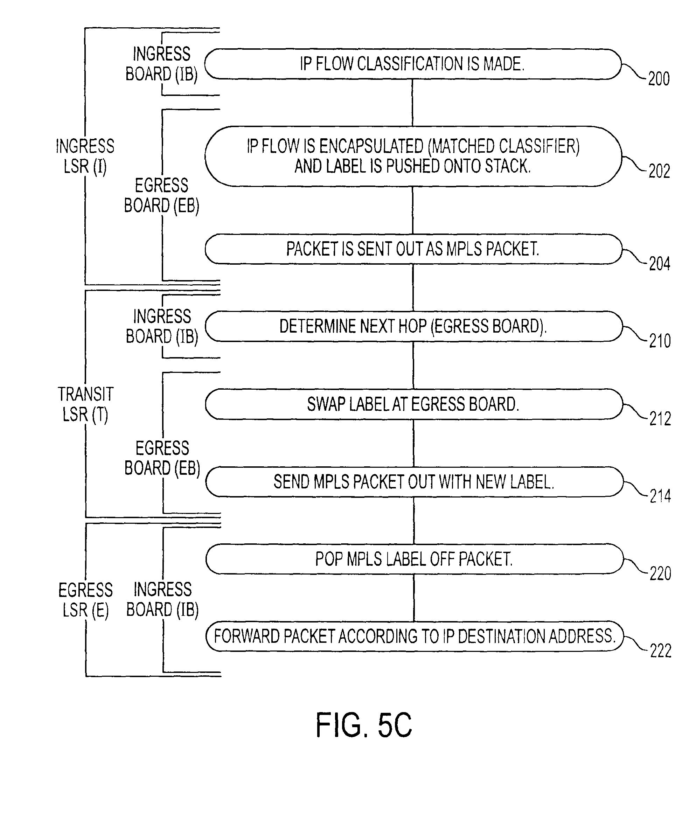

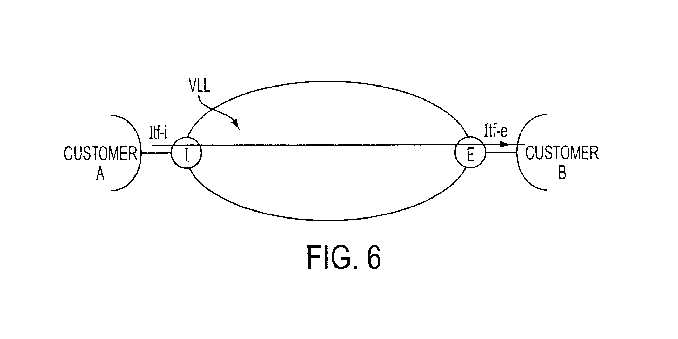

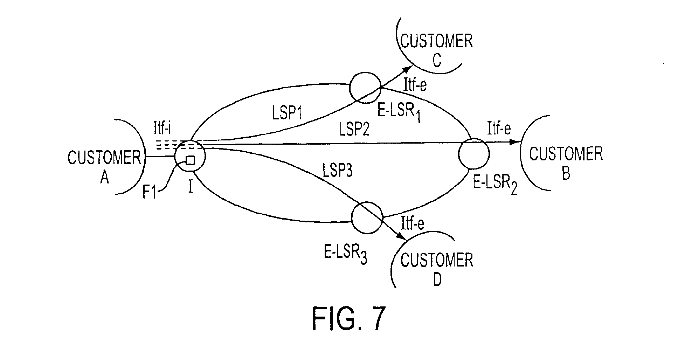

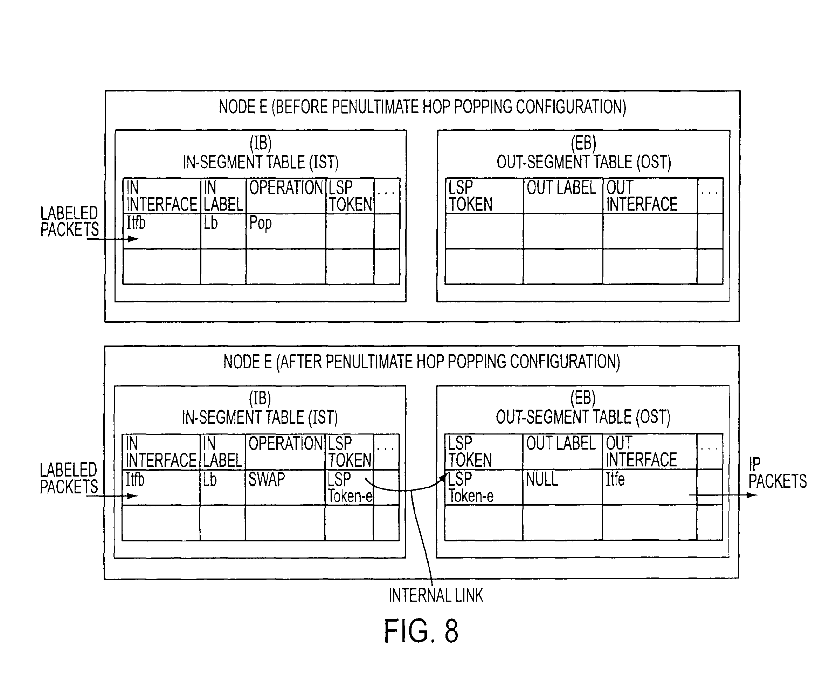

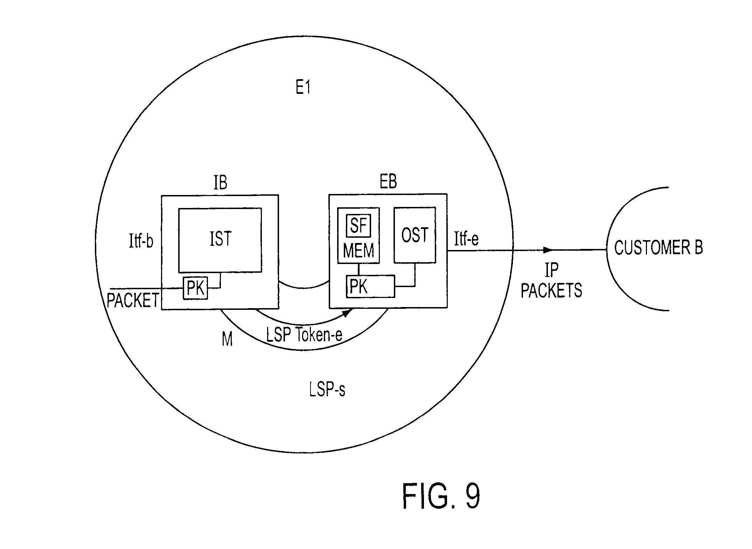

   Next, the following steps are taken to route IP packets (P) through the tunnel. These steps are illustrated in the flowchart in Figure 5C.
   1) In the forwarding plane for the ingress LSR (I), an IP flow classification is made at each ingress board for the IF traffic (packet) entering at an ingress board (IB) by its respective classifier (C) (200). IP flow is encapsulated into MPLS and label is pushed onto the stack at the egress board for the ingress LSR (I) (202). The packet (P) is sent out as an MPLS packet (204).
   2) In the forwarding plane for the transit LSR (T), an MPLS in-segment table (IST) located in the ingress board (IB) is used to determine the next hop through the tunnel (210). The MPLS label is swapped with the next label at the egress board (EB) for the transit LSR (T) (212). The MPLS packet is sent out with the new label (214).
   3) In the forwarding plane for the egress LSR (E), the MPLS label is popped off the packet by the ingress board IB) for the egress LSR (220). The packet is then forwarded based on its IP destination address (222).
B) Perform a classification configuration at the ingress node or router (I) (step 20 in Figure 4). That is, route traffic through the tunnel based on its classification using a classification table (CT) located on an ingress board (IB) at the ingress node (I). In a preferred embodiment, the classification table (CT) can be stored in memory, such as ROM or RAM. In another preferred embodiment, the classifier (C) is also located on the ingress board (IB) and operably coupled to the customer interface (Itf-i). The classifier (C) can be a processing apparatus such as a processor, a microprocessor, a signal processor or central processing unit or any other processing device which is operably coupled to the memory that the classification table (CT) is located on. One classification can be that all traffic received at the customer interface (Itf-i) is routed to the tunnel, as shown in Figure 6. In Figure 6, all incoming traffic is sent to the same virtual lease line (VLL).
   Another kind of classification is shown in Figure 7, where ingress classification is by micro-flow. Customer micro-flows are directed to different tunnels (LSP1, LSP2, LSP3). The different micro-flows are identified by using a filter (F1) located at the ingress router (I) and operably coupled to the customer interface (Itf-i). In a preferred embodiment, the filter (F1) can be can be a processing apparatus such as a processor, a microprocessor, a signal processor, central processing unit or any of a number of filtering devices. It will route packets based on different criteria such as IP source address, IP destination address, port, protocol, etc. In this case the customer has multiple virtual leased lines (LSP1, LSP2, LSP3), one per micro-flow. The port can be a source port or a destination port.
   In the forwarding plane for the ingress LSR (I), a class determination is made at each ingress board (IB) for the IP traffic (packet) entering at an ingress board (IB) by its respective classifier (C). The IP packet (P) is encapsulated into MPLS. An MPLS label, Lb, is pushed onto the packet and the packet is sent to the Egress LSR (E) through the tunnel.
C) Stitch or configure an out-segment from the tunnel's egress node (E) or egress router to the customer interface by i) creating an out-segment on the egress customer interface (itf-e) (30); and ii) stitching the incoming MPLS tunnel in-segment to the out-segment (35) (see figure 4). With stitching, the bandwidth and other quality of service parameters are identified and then allocated. Therefore, the interface between the egress node (E) and the customer is defined. Extending a tunnel towards the egress router's (E) interface (Itf-e) with the customer (customer B) is done by stitching the tunnel with an outgoing label-switched path (LSP-s) whose label is "Null", as shown in Figure 8. Figure 9 illustrates the virtual leased line (VLL) tunnel being extended towards the egress customer interface (Itf-e). "Penultimate hop popping" is used to do this.

As shown in Figure 8, an out-segment table entry in an out-segment table (OST) or egress table look-up at the egress side or egress board (EB) of the egress router (E) is created with the outgoing label set to "Null." (300). In addition, an in-segment table (IST) or ingress table look-up entry at the ingress side or board (IB) of the egress router (E) is linked to that out-segment table entry at the egress router (E) with a Label Switched Path token (LSP token-e) (310). See Figure 8.(In a preferred embodiment, both the in-segment table (IST) and the out-segment table (OST) can be stored in memory, such as read only memory (ROM), read and write memory (RAM), or any other form of memory apparatus).

In this way, labeled packets received with label Lb from in-segment interface (Itf-b) at the ingress board (IB) of the egress router (E) are sent to the out-segment side or egress board (EB) of the egress router (E) with LSP token-e (320). The transmission medium (M) or link connecting the ingress board (IB) and the egress board (EB) can be twisted pair wire or switch, coaxial cable, optical fiber, wireless or any other medium capable of supporting the transmission of packets. At the egress side, a processor (P) in LSP-s operably coupled to the out-segment table (OST) does the look-up of the LSP token-e in the out-segment cable (OST) and checks the outgoing label (330). If the outgoing label of the LSP token-e is "Null" (335), it strips off (or removes) the MPLS header (340) and sends out IP packets (P) on the egress interface (Itf-e) at the egress board (EB) of the egress router (E) to the customer, customer B (350). If the outgoing label of the LSP Token-e is not equal to "Null", the label is swapped and the packet is send out as an MPLS packet with a new label (337). In a preferred embodiment, software (SF) stored in memory (MEM) operably coupled to said processor executes said stitching.

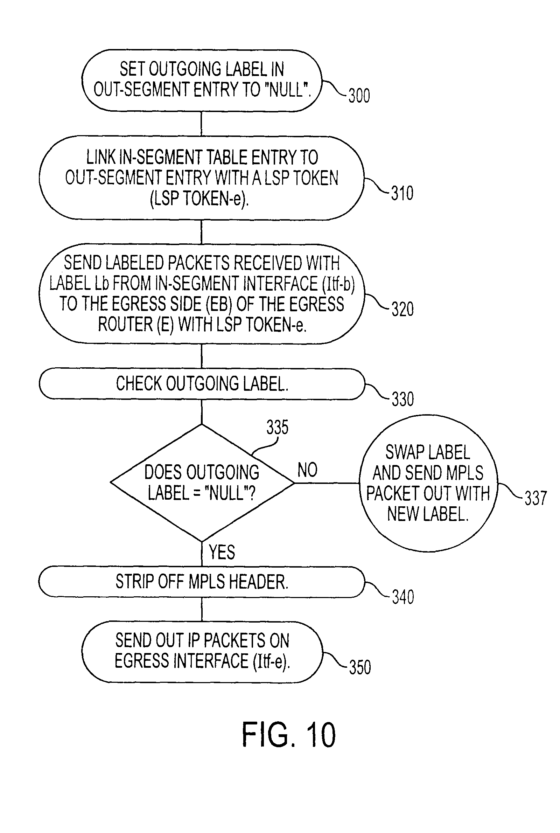

Summary of Steps Performed when Stitching an Out-Segment from the Egress Node or Egress Router to a Customer Interface (See Figure 10).
- Set outgoing label in out-segment entry to "Null." (300)
- Link in-segment table entry to out-segment entry with a LSP token, LSP token-e. (310)
- Send labeled packets received with label Lb from in-segment interface (Itf-b) to the egress side (EB) of the egress router (E) with LSP token-e. (320)
- Check outgoing label.(330)
- Determine if outgoing label = "Null" (335); if No, swap label and send MPLS packet out with new label. (337)
- If yes to step 335, then strip off (or remove) the MPLS header (340) and
- Send out IP packets on the out-segment interface (Itf-e) to customer B.(350)

If we wish to extend the virtual leased line to another customer interface (Itf-e) step D) is performed. D) Stitch or configure an out segment from the ingress node (I) or ingress router to another customer interface (Itf-e). At the ingress node (I), configure the classification to stitch ingress customer interface (Itf-i) to MPLS tunnel segment (40). See Figure 4. When using stitching to extend the virtual leased line to the customer interface (itf-I) at the ingress router (I), the functions of the ingress (IB) and egress routers (EB) discussed above are reversed.

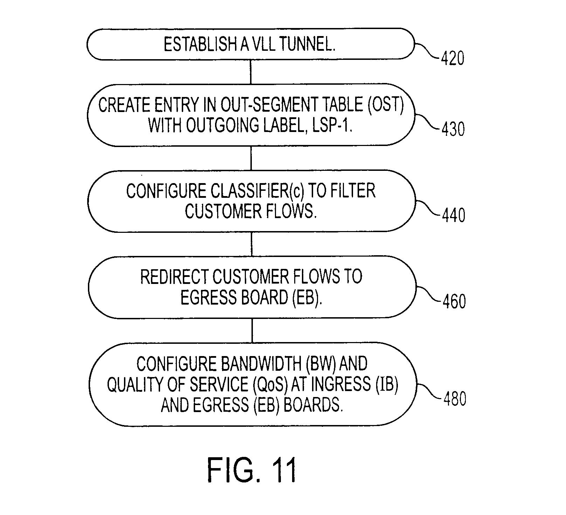

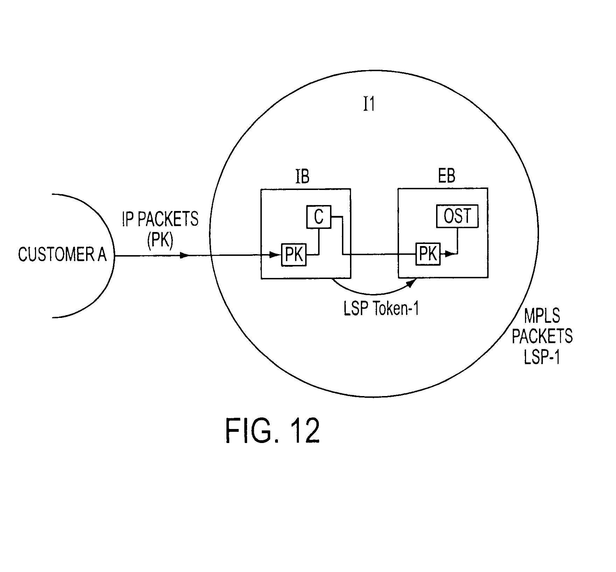

The following are the steps taken when stitching the incoming customer interface to a VLL tunnel, or when extending a VLL tunnel to the customer interface (Itf-i) at the ingress router (I). See Figure 11. Figure 12 illustrates stitching an ingress interface from the ingress router of a VLL tunnel to a customer interface using the steps below.
- Establish the VLL tunnel (420).
- Create an entry in the out-segment table (OST) of the egress board (EB) of the Ingress Router (I) with an outgoing label, LSP-1 (430).
- At the ingress board (IB) of the Ingress Router (I) where the customer interface (Itf-i) is connected, configure the classifier (C) to filter customer flows (all packets or customer microflows)(460).
- Configure bandwidth (BW) and Quality of Service (QoS) at the ingress (IB) and the egress boards (EB) (480).

### Stitching Between Two Domains

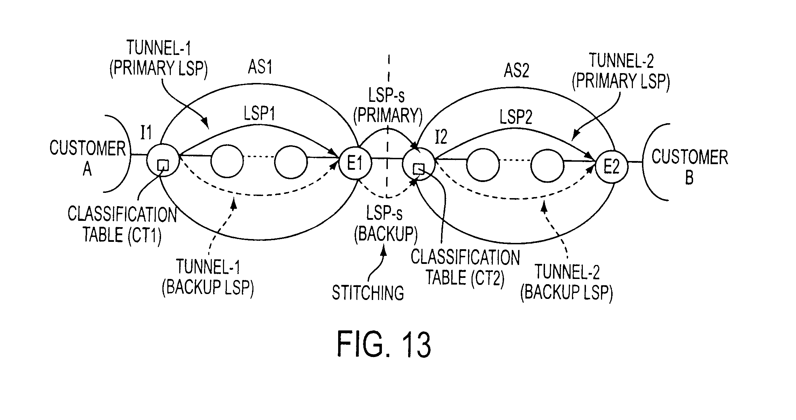

In the prior art, a tunnel that is configured and controlled by a domain operator terminates at the egress node of a domain. In the present Invention, stitching allows a virtual leased line to be configured across multiple domains. More specifically, two Gunnels are stitched together. This allows a tunnel consisting of a pair of label-switched paths (LSP) to be set up between two customers who are connected to different domains (different Autonomous Systems). Figure 13 illustrates stitching between different domains or Autonomous Systems. When stitching between two tunnels, the customer interface located at the egress node in the previous example is replaced by the second tunnel. Since label switched paths may not cross an autonomous system's boundary, a first label switched path (LSP1) is established in the first autonomous system (AS1) and a second label switched path (LSP2) is established in the second autonomous system (AS2) through signaling protocols. They are then stitched together.

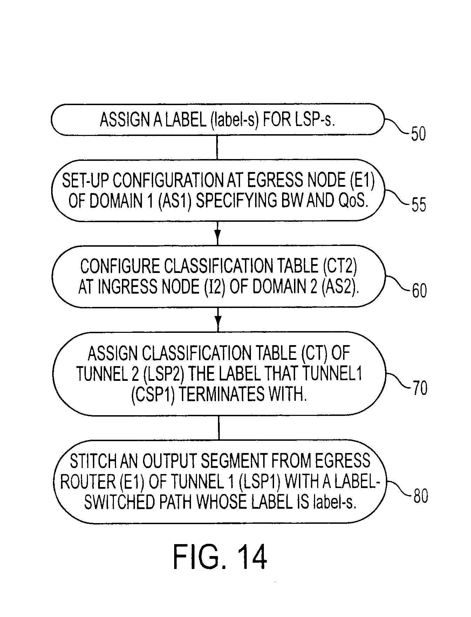

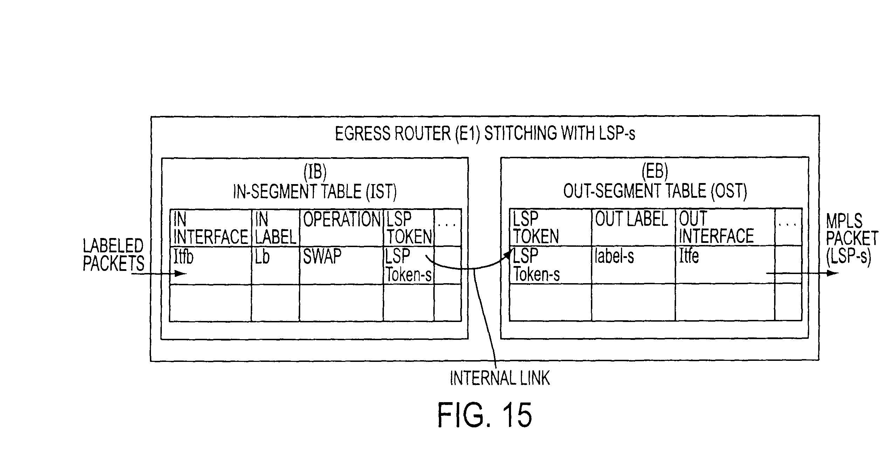

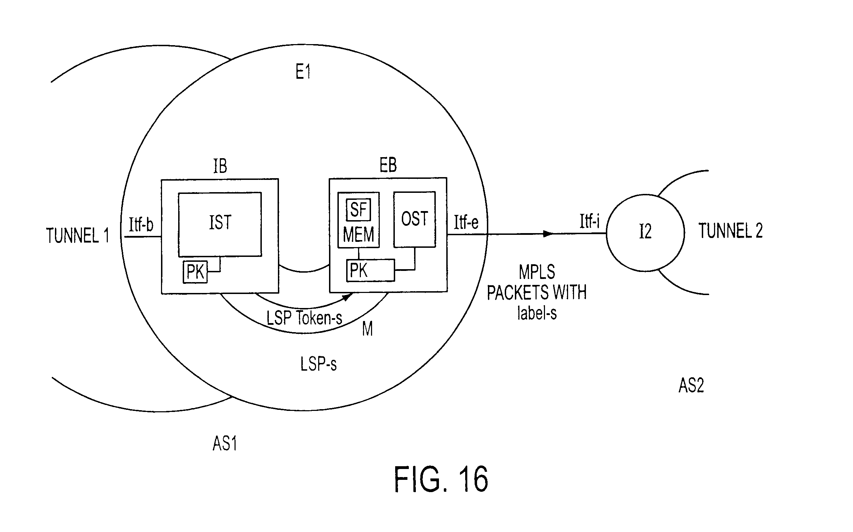

The following steps or process are performed when doing stitching between two tunnels located in different domains (see Figure 14). Assume that the two tunnels are already set up:
1) Assign a label (label-s) for LSP-s which is located between autonomous system 1 (AS1) and autonomous system 2 (AS2)(50).
2) Set-up the configuration at the egress node (E1) of domain 1 (AS1) specifying the bandwidth (BW) and the Quality of Service (QoS). This defines the out segment which connects the egress node (E1) of tunnel 1 (LSP1) to the ingress node (I2) of tunnel 2 (LSP2) located in the second MPLS domain (AS2) (55). The egress node or router (E1) comprises a processor, an out interface or out-segment interface and an out-segment table (OST) operably coupled to the processor. The egress router (E1) also has ingress board comprising an IP interface or In interface.
3) Configure the classification table (CT2) at the ingress node (I2) of the second MPLS domain (AS2) (60). Assign the classification table (CT2) of tunnel 2 (LSP2) the label allocated for LSP-s (label-s)(70). In a preferred embodiment, label-s is manually configured and agreed to by both domains. (Configuration is also required at classification table (CT1) at the ingress node (I1) of the first MPLS domain (AS1) to redirect incoming IP packets in tunnel 1(LSP 1)).
4) Stitch or configure an out-segment from the egress node or egress router (E1) connected or coupled to tunnel 1 (LSP1) of domain 1 (AS1) to the ingress node (I2) connected or coupled to tunnel 2 (LSP2) of the second MPLS domain (AS2). Therefore, the interface between the egress node (E1) of domain 1 (AS1) and the ingress node (I2) of domain 2 (AS2) is defined. Extending the first tunnel's egress router (E1) towards the second tunnel's ingress router (I2) is done by stitching the first tunnel (LSP1) with an outgoing label-switched path (LSP-s) whose label is label-s, as shown in Figure 15. Figure 16 illustrates the first tunnel being extended towards the second tunnel's (LSP2) ingress (I2) interface (Itf- i) .

As shown in Figure 15, an out-segment table entry in an out-segment table (OST) (tunnel 1's egress table look-up) at the egress side or egress board (EB) of tunnel 1's egress router (E1) is created with the outgoing label, label-s.(500) In addition, an in-segment table or ingress table look-up (IST) entry at the ingress side or board (IB) of the egress router (E1) is linked to that out-segment table entry at the egress router (E1) with a label switched path token or LSP token-s (510). See Figure 16.

In this way, the labeled packets received with label Lb from in-segment interface (Itf-b) at the ingress board (IB) of the egress router (E1) of tunnel 1 (LSP1; are sent to the egress side or egress board (EB) of the egress router (E1) with LSP token-s (520). At the egress side, the LSP segment (LSP-s) does the look-up of the LSP token-s in the out-segment table (OST) incoming label of tunnel 1 (LSP1) is swapped with label-s (530) and packet is sent out as MPLS (S40).

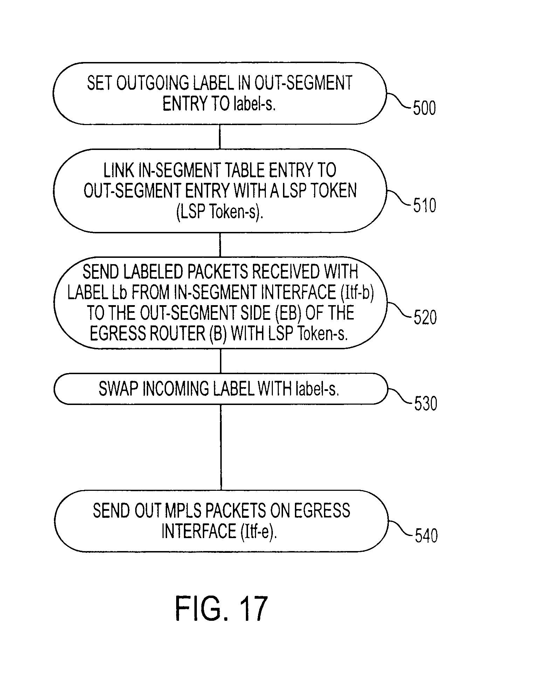

Summary of steps performed when Stitching an Out Segment from the Egress Node (E1) of Tunnel 1 (LSP1) to the Ingress Node (I2) of Tunnel 2 (LSP2).(See Figure 17).
- Set outgoing label in out-segment entry to label-s. 500)
- Link in-segment table entry to out-segment entry with a LSP token, LSP token-s.(510)
- Send labeled packets received with label Lb from in-segment interface (Itf-b) to the out-segment side (EB) of the egress router (E1) with LSP token-s.(520)
- Swap incoming label with label-s (530), and
- Send out MPLS packets with label-s on the egress interface (Itf-e) to to ingress node (I2) of tunnel 2 (LSP2).(540)

While the invention has been disclosed in this patent application by reference to the details of preferred embodiments of the invention, it is to be understood that the disclosure is intended in an illustrative, rather than a limiting sense, as it is contemplated that modifications will readily occur to those skilled in the art, within the spirit of the invention and the scope of the appended claims and their equivalents.

## Claims

1. A method of extending a tunnel to a customer interface, comprising the steps of:
configuring a tunnel between a first router and a second router;
classifying at at least one of said routers; and
stitching an output segment from said at least one router to the customer interface.

2. The method according to claim 1, wherein said step of configuring a tunnel between said first router and said second router, comprises:
setting up a path;
configuring at least one segment;
reserving bandwidth;
configuring at least one filter; and
redirecting incoming packets.

3. The method according to claim 1, wherein said step of classifying said router comprises routing traffic to said tunnel using a classification table.

4. The method according to claim 1, wherein said step of stitching an out segment from said router to said customer interface comprises extending a tunnel towards the customer interface by stitching said tunnel with an outgoing label-switched path.

5. The method according to claim 2, further comprising the step of routing IP packets through said tunnel.

6. The method according to claim 3, wherein said step of classifying comprises routing traffic from said customer interface to said tunnel.

7. The method according to claim 3, wherein said classifying comprises sending traffic to a virtual lease line.

8. The method according to claim 3, wherein said classifying comprises classifying by micro-flow, whereby customer micro-flows are directed to different tunnels.

9. The method according to claim 4, wherein said step of extending a tunnel towards the customer interface by stitching the tunnel with an outgoing label-switched path, comprises:
- setting an outgoing label in an out entry;
- linking an in entry to said out entry;
- sending at least one labeled packet from an in interface to an out side of said second router;
- removing a header; and
- sending out packets on an out interface.

10. The method according to claim 4, wherein said step of extending a tunnel towards the customer interface by stitching the tunnel with an outgoing label-switched path, comprises:
- setting an outgoing label in an out-segment entry to null;
- linking an in-segment entry to an out-segment entry with a token;
- sending at least one labeled packer; from an in-segment interface to an out-segment side of said second router with said token;
- removing a MPLS header if said outgoing label equals null; and
- sending out IP packets on an out-segment interface.

11. The method according to claim 4, wherein said step of extending a tunnel towards the customer interface by stitching the tunnel comprises penultimate hop popping.

12. The method according to claim 4, wherein said step of configuring a tunnel between a first router and a second router, comprises:
setting up a path;
configuring at least one segment;
reserving bandwidth;
configuring at least one filter; and
redirecting incoming packets.

13. The method according to claim 4, wherein said step of classifying at said ingress router comprises routing traffic to said tunnel using a classification table.

14. The method according to claim 8, further comprising the step of identifying said different micro-flows by filtering.

15. A method of connecting tunnels between a first and a second domain, comprising the steps of:
assigning a label for a path located between the first and the second domain;
setting up a configuration at a first router of said first domain specifying bandwidth and quality of service;
configuring a classification table at a second router of said second domain, whereby said classification table of a second tunnel has a label which is configured and agreed to by both domains; and
defining an out segment which connects a first tunnel connected to a first router in said first domain to said second tunnel connected to said second router located in said second domain.

16. The method according to claim 15, wherein said domains are MPLS domains.

17. The method according to claim 15, wherein said step of defining an out segment from said first router to said second router comprises extending a tunnel towards said second router by stitching said first tunnel with an outgoing label switched path.

18. The method according to claim 17, wherein said step of extending a tunnel towards said second router by stitching said first tunnel with an outgoing label switched path, comprises:
- setting an outgoing label in an out entry;
- linking an in entry to said out entry;
- sending at least one labeled packet from an in interface to an out side of said second router;
- swapping an incoming label; and
- sending out packets on an out interface.

19. The method according to claim 17, wherein said step of extending a tunnel towards said second router by Stitching Said first tunnel with an outgoing label switched path, comprises:
- setting an outgoing label in an out-segment entry;
- linking an in-segment table entry to an out-segment entry with a token;
- sending at least one labeled packet from an in-segment interface to an out-segment side of said second router with said token;
- swapping an incoming label; and
- sending out MPLS packets on an out-segment interface.

20. An extension between a customer interface and a tunnel, comprising:
a first router located at a first end of the tunnel, comprising:
a first ingress board having a first interface, at least one classification table, at least one classifier operably coupled to said classification table and to said first interface, and at least one filter operably coupled to said first interface;
a second router located at a second end of said tunnel, comprising:
a processor;
an egress board having at least one out-segment interface and an out-segment table operably coupled to said processor; and
a second ingress board having at least one in-segment interface an in-segment table; and
a transmission medium operably coupled between said egress board and said second ingress board, whereby a token sent through said transmission medium links said in-segment table and said out-segment table.
